# EUROPEAN PATENT APPLICATION

(11) **EP 3 203 101 A1**
(43) Date of publication of application: **09.08.2017**
(21) Application number: 16154012.5
(22) Date of filing: 03.02.2016
(51) Int. Cl.: F16D 3/04

(54) **COUPLING ASSEMBLY WITH A CLIPPED SLIDING MEMBER**

(71) Applicant: U-Shin Deutschland Zugangssysteme GmbH, 85253 Erdweg (DE)
(72) Inventor: DEUTSCHMANN, Nicolai, 85253 Erdweg (DE); LEJEUNE, Nicolas, 85253 Erdweg (DE)
(74) Representative: Gaillarde, Frédéric F. Ch.

(57) **Abstract**

The invention relates to a coupling assembly, comprising
- a first coupling member (1) having a first coupling means,
- a second coupling member) having a second coupling means,
- a sliding member (3) comprising
- a first cooperating means cooperating translationally with the first coupling means about a first direction,
- a second cooperating means cooperating translationally with the second coupling means about a second direction substantially perpendicular to the first direction,

wherein the first coupling member (1) and/or the sliding member (3) comprises retaining means (4) retaining axially and/or radially the slider (3) on the first coupling member (1), such that the first cooperating means cooperates with the first coupling means.

The invention further relates to corresponding transmission assembly, motor vehicle and assembling method.

## Description

The invention relates to a coupling assembly for transmitting a rotational movement. The invention further relates to a corresponding transmission assembly, as well as a motor vehicle and assembling method.

In the field of coupling and transmission assembly for transmitting a rotational movement between two parts such as a motor shaft and a driven shaft, there is a need to accommodate with axial misalignment and parallel misalignments of the rotation axis of said parts. To this end it is known to use a coupling assembly, also called an Oldham coupling, comprising;
- an input disc having a radial coupling tenon, and connected to the motor shaft,
- an output disc having a radial coupling slot, and connected to the driven shaft,
- a sliding disc having a radial cooperating slot receiving the coupling tenon, and a cooperating tenon received in the coupling slot.

The coupling tenon, and the cooperating slot extend longitudinally and substantially perpendicularly to the coupling slot and the cooperating tenon.

The coupling assembly of the prior art has some disadvantages. When mounting the assembly, the sliding disc is generally mounted on the input disc, and the output disc is then mounted on the sliding disc. In such an assembling process, the sliding disc may slip out of the input disc axially or radially before the output disc is mounted on the sliding disc. This leads to a loss of time and increased manufacturing costs.

An object of the invention is to propose a coupling assembly requiring an improved manufacturing process with lower manufacturing costs.

To this end the invention relates to a coupling assembly for transmitting a rotational movement, the coupling assembly comprising:
- a first coupling member rotationally mounted about a first axis, and having a first coupling means,
- a second coupling member rotationally mounted about a second axis, and having a second coupling means,
- a sliding member comprising
- a first cooperating means cooperating with the first coupling means such that the sliding member is translationally moveable relatively to the first coupling member about a first direction,
- a second cooperating means cooperating with the second coupling means such that the sliding member is translationally moveable relatively to the second coupling member about a second direction substantially perpendicular to the first direction,
wherein the first coupling member and/or the sliding member comprises retaining means retaining axially and/or radially the slider on the first coupling member, such that the first cooperating means cooperates with the first coupling means.

Advantageously, the retaining means enable to maintain axially and/or radially the sliding member on the first coupling member so as to avoid that the sliding member slips out of the first coupling member axially and/or radially. This leads to a gain of time and decreased manufacturing costs.

According to further embodiments which can be considered alone or in combination:
- the retaining means comprises at least one clip fastening means retaining radially the slider on the first coupling member ; and/or
- the first cooperating means comprises opposite radial ends along the first direction, and wherein at least one of said clip fastening means is placed on at least one of said opposite radial ends; and/or
- the sliding member comprises said at least one clip fastening means; and/or
- the retaining means comprises at least one coupling projection retaining axially the slider on the first coupling member; and/or
- said at least one coupling projection comprises opposite ends along the first direction, and wherein at least one of said clip fastening means is placed on at least one of said opposite ends; and/or
- the retaining means comprises a retaining edge extending along the first direction; and/or
- the retaining means comprises a retaining groove extending along the first direction; and/or
- the first coupling means comprises a coupling groove extending along the first direction, the coupling groove receiving the slider such that the slider is translationally moveable on or in the coupling groove, and wherein the retaining means retain axially the slider on or in the coupling groove; and/or
- the first coupling means comprises a first coupling protuberance extending along the first direction, the first coupling protuberance cooperating with the slider such that the slider is translationally moveable on the first coupling protuberance, and wherein the retaining means retain axially the slider on the first coupling protuberance; and/or
- the second coupling means comprises a second coupling protuberance, and the second cooperating means comprises a cooperating groove extending along the second direction, the cooperating groove receiving the second coupling protuberance such that the slider is translationally moveable relatively to the second coupling member; and/or
- the first coupling member is an input disc, and the second coupling member is an output member, preferably an output shaft.

The invention also relates to a transmission assembly comprising a motor comprising a motor shaft, and a driven member comprising a driven shaft,
wherein the driven shaft is coupled to the motor shaft by a coupling assembly according to the invention, such that the driven member is driven in rotation by the motor

The invention further concerns a motor vehicle comprising a transmission assembly according to the invention.

The invention also relates to a method of assembling a coupling assembly according to the invention, comprising the following steps:
- mounting the sliding member on the first coupling member such that the retaining means retain axially and/or radially the slider on the first coupling member, and such that the first cooperating means cooperates with the first coupling means, and then
- mounting the second coupling member on the sliding member, such that the second cooperating means cooperates with the second coupling means.

Other features and advantages of the present invention will become apparent from the following description of non-limitative embodiments, with reference to the attached drawings in which:
- figures 1A, 2A, 3A, 4A, 5A, 6A, 7A are exploded space views of coupling assemblies according to seven embodiments of the invention in a disassembled state;
- figure 1B, 2B, 3B, 4B, 5B, 6B, 7B are space views the respective coupling assemblies in an assembled state;
- figure 7C is a sectional view of the coupling assembly of figure 7B; and
- figure 8 is a sectional view of transmission assembly according to the first embodiment of the invention.

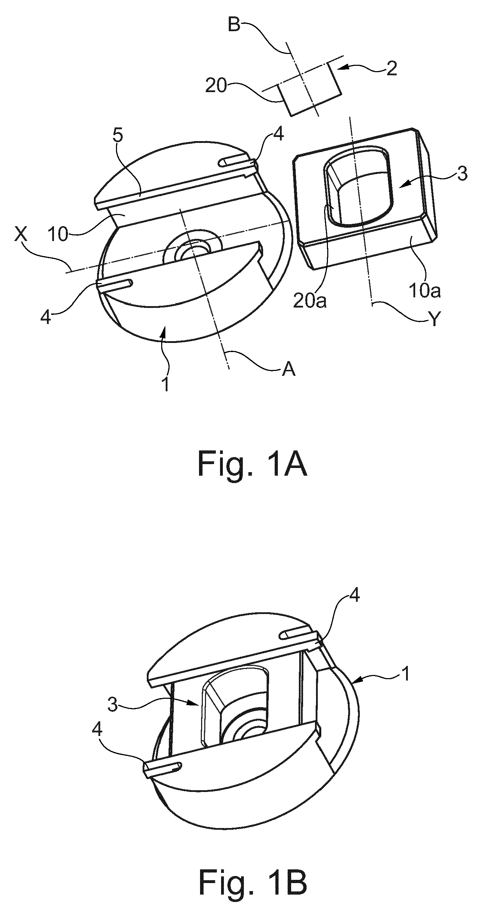

Referring to figures 1A and 1B, the first embodiment of the invention relates to a coupling assembly for transmitting a rotational movement between two items.

The coupling assembly comprises a first coupling member 1, a second coupling member 2 and a sliding member 3, in particular placed substantially between the first 1 and second 2 coupling members. The coupling assembly of the invention is preferably of the type generally called "Oldham coupling".

The first coupling member 1 is rotationally mounted about a first axis A and has a first coupling means 10; and the second coupling member 2 is rotationally mounted about a second axis B and has a second coupling means 20.

The sliding member 3 comprises a first cooperating means 10a cooperating with the first coupling means 10 such that the sliding member 3 is translationally moveable relatively to the first coupling member 1 about a first direction X.

The sliding member 3 further comprises a second cooperating means 20a cooperating with the second coupling means 20 such that the sliding member 3 is translationally moveable relatively to the second coupling member 2 about a second direction Y substantially perpendicular to the first direction X.

The coupling assembly of the invention enables to accommodate with axial misalignment and parallel misalignments of the rotation axis of said items.

According to the invention, the first coupling member and/or the sliding member comprises retaining means retaining axially and/or radially the slider 3 on the first coupling member 1, such that the first cooperating means 10a cooperates with the first coupling means 10.

Advantageously, the retaining means enable to maintain axially and/or radially the sliding member on the first coupling member so as to avoid that the sliding member slips out of the first coupling member axially and/or radially. This leads to a gain of time and decreased manufacturing costs.

In particular, according to the first embodiment of the invention, the first coupling member 1 comprises two retaining means referred to as 4, 5, one 4 retaining radially and the other 5 retaining axially the slider 3 on the first coupling member.

In addition, the sliding member 3 preferably has a substantially parallelepipedic shape. Such a shape enables to limit the space requirement of the coupling assembly and is easy to assemble with planar shapes of a corresponding coupling member.

According to a preferred variant, the retaining means comprise at least one clip fastening means 4 retaining radially the slider 3 on the first coupling member 1. The retaining means preferably comprise at least one, preferably two, clip fastening means 4 placed at each of the opposite ends of the first coupling means.

Advantageously, clip fastening means 4 authorize the placing of the sliding member 3 on the first coupling member 1 in a given position, and a subsequent maintaining of the sliding member in said position. In particular, the clip fastening means 4 are clip fastening structures.

By "clip fastening means" for fastening two elements, should be understood a fastening means involving an elastic deformation of a part of the fastening means, and a subsequent engagement of the fastening means with one or both of said elements. Such an elastic deformation allows a reversible fastening.

According to a preferred variant, the first cooperating means 10a comprises opposite radial ends along the first direction X, and at least one of said clip fastening means 4 is placed on at least one of said opposite radial ends.

As shown in figures 1A and 1B, the clip fastening means 4 are placed on the first coupling member 1.

According to a preferred variant, the retaining means comprises at least one coupling projection 5 retaining axially the slider 3 on the first coupling member 1.

According to a preferred variant, said at least one coupling projection 5 comprises opposite ends along the first direction X, and at least one of said clip fastening means 4 is placed on at least one of said opposite ends.

According to a preferred variant, the retaining means comprise a retaining edge extending along the first direction X. The retaining edge should be understood as a positive structure as shown in figure 1A. The coupling projection 5 could also be a negative structure.

Advantageously, a retaining edge with clip fastening means at its end enables to insert the sliding member 3 substantially in the first coupling member 1 as shown in figure 1B.

According to a preferred variant, the first coupling means 10 comprises a coupling groove extending along the first direction X, the coupling groove receiving the slider 3 such that the slider 3 is translationally moveable on or in the coupling groove. In addition, the retaining means, in particular the projection 5, retain axially the slider 3 on or in the coupling groove.

As shown in figure 1B, the sliding member 3 is placed substantially in the coupling groove.

According to an alternative detailed below, the first coupling means may comprise a first coupling protuberance, cooperating with a corresponding sliding member.

According to a preferred variant, the second coupling means 20 comprises a second coupling protuberance, and the second cooperating means 20a comprises a cooperating groove extending along the second direction Y, the cooperating groove receiving the second coupling protuberance such that the slider 3 is translationally moveable relatively to the second coupling member 2.

A second coupling member 2 comprising such a second coupling means has a decreased space radially with respect to the ones of the classic Oldham couplings.

Preferably, the retaining edge 5 extends beyond the first cooperating means 10a, in particular beyond the sliding member 3, with reference to the rotation axis A.

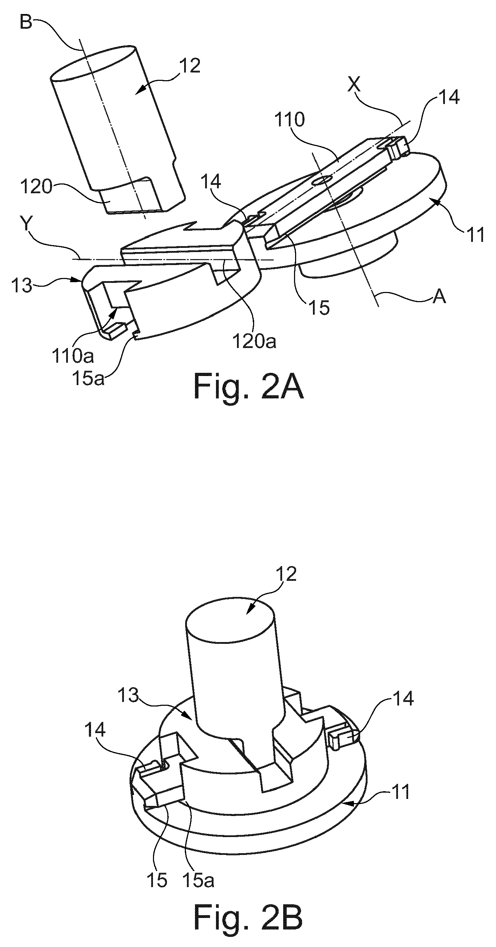

Referring now to figures 2A and 2B, the second embodiment of the invention relates to a coupling assembly similar to the one of the first embodiment, in particular with the following differences.

The sliding member 13 preferably has a substantially cylindrical shape.

According to a preferred variant, the retaining means 15 comprise a retaining groove extending along the first direction X. The sliding member comprises a corresponding retained edge 15a.

According to a preferred variant, the first coupling means 110 comprises a first coupling protuberance extending along the first direction X. The first coupling protuberance cooperates with the slider 13 such that the slider 13 is translationally moveable on the first coupling protuberance. In addition, the retaining means 15 retain axially the slider 13 on the first coupling protuberance.

Preferably, the retained edge 15a extends beyond the first coupling protuberance of the first coupling member 11, with reference to the rotation axis A.

In particular, the first coupling member 11 comprises retaining means 14 retaining radially the slider 13 on the first coupling member 11.

The sliding member 13 comprises a first cooperating means 110a cooperating with the first coupling means 110 such that the sliding member 13 is translationally moveable relatively to the first coupling member 11 along the first direction X.

The second coupling member 12 is rotationally mounted about the second axis B and has a second coupling means 120.

The sliding member 13 comprises a second cooperating means 120a cooperating with the second coupling means 120 such that the sliding member 13 is translationally moveable relatively to the second coupling member 12 along the second direction Y.

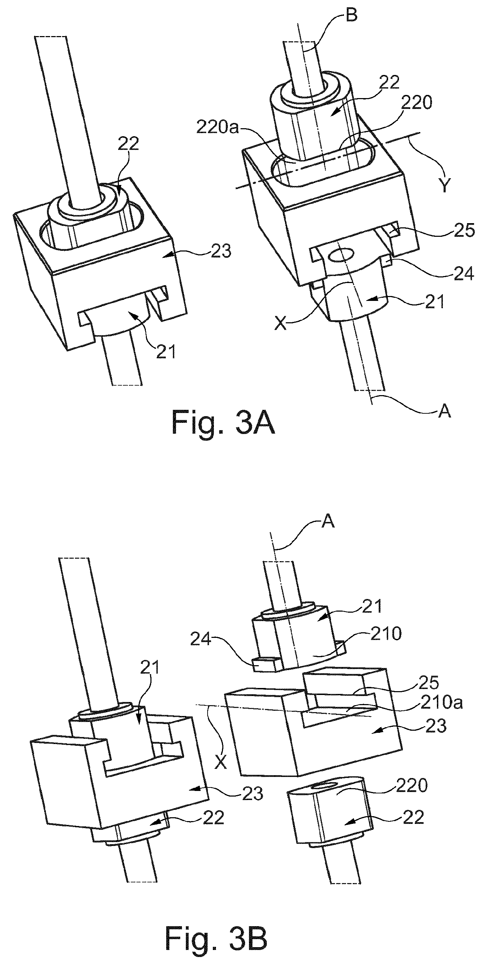

Referring now to figures 3A and 3B, the third embodiment of the invention relates to a coupling assembly similar to the one of the second embodiment, in particular with the following differences.

According to the third embodiment of the invention, the first coupling member 21 comprises two retaining means 24 and the sliding member 23 comprises two corresponding retaining means 25. The retaining means 24 and 25 both cooperate together to retain axially the slider 23 on the first coupling member 21.

In addition, the sliding member 23 preferably has a complex shape as shown in figures 3A and 3B to enable the insertion of a first coupling member that is an input shaft. Such an input shaft enables to limit the space requirement of the input part of the first coupling member.

According to a preferred variant, the retaining means 24 of the first coupling member 21 comprise two clip fastening means cooperating with corresponding counterclip structures 25 of the sliding member 23.

Preferably, the sliding member 23 is not retained radially along one direction, in particular along direction X as shown in figures 3A and 3B.

The sliding member 23 comprises a first cooperating means 210a cooperating with the first coupling means 210 such that the sliding member 23 is translationally moveable relatively to the first coupling member 21 along the first direction X.

The first coupling member 21 is rotationally mounted about the first axis A and has first coupling means 210; and the second coupling member 22 is rotationally mounted about the second axis B and has a second coupling means 220.

The sliding member 23 comprises a second cooperating means 220a cooperating with the second coupling means 220 such that the sliding member 23 is translationally moveable relatively to the second coupling member 22 along the second direction Y.

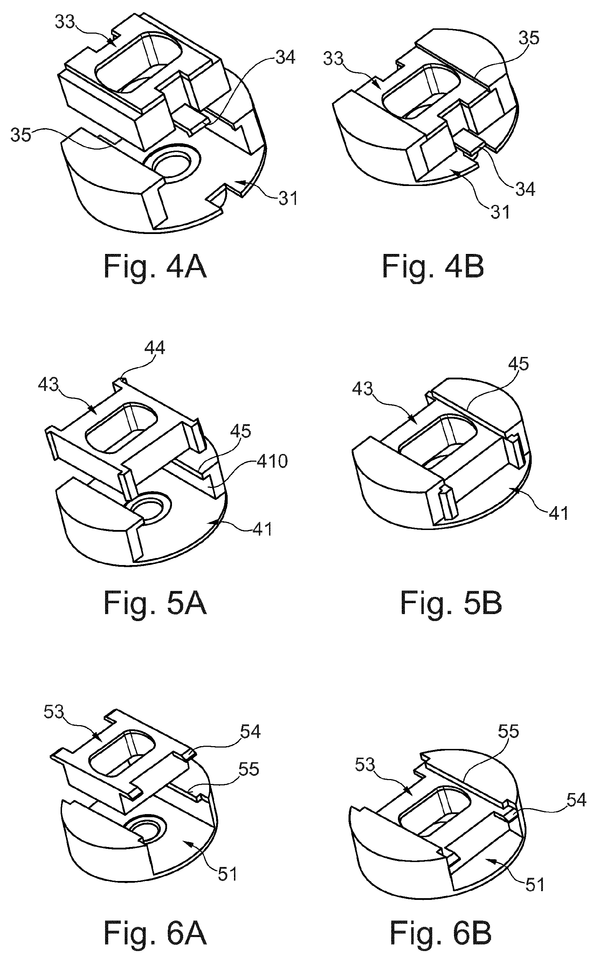

Referring now to figures 4A and 4B, the fourth embodiment of the invention relates to a coupling assembly similar to the one of the first embodiment, in particular with the following differences.

According to a preferred variant, the sliding member 33 comprises said at least one clip fastening means 34, preferably two clip fastening means 34.

As shown in figures 4A and 4B, the clip fastening means 34 are preferably placed on a median line of the sliding member 33 according to a plane parallel to the axis X and Y. In addition, the clip fastening means 34 cooperate with a supporting face on the first coupling member 31.

In particular, the first coupling member 31 comprises retaining means comprising two coupling projections 35 retaining axially the slider 33 on the first coupling member 31.

Referring now to figures 5A and 5B, the fifth embodiment of the invention relates to a coupling assembly similar to the one of the first and fourth embodiments, in particular with the following differences.

According to a preferred variant, the sliding member 43 comprises said at least one clip fastening means 44, preferably four clip fastening means 44.

As shown in figures 5A and 5B, the clip fastening means 44 are preferably placed on four corners of the sliding member 43 according to a plane parallel to the directions X and Y. In addition, the clip fastening means 44 cooperate with extremities of the coupling means 410 on the first coupling member 41.

In particular, the first coupling member 41 comprises retaining means comprising two coupling projections 45 retaining axially the slider 43 on the first coupling member 41.

Referring now to figures 6A and 6B, the sixth embodiment of the invention relates to a coupling assembly similar to the one of the first and fifth embodiments, in particular with the following differences.

According to a preferred variant, the sliding member 53 comprises said at least one clip fastening means 54, preferably four clip fastening means 54.

As shown in figures 6A and 6B, the clip fastening means are preferably placed on a four corners of the sliding member 53 according to a plane parallel to the axis X and Y. In addition, the clip fastening means 54 cooperate with extremities of the retaining edge 55 of the first coupling member 51.

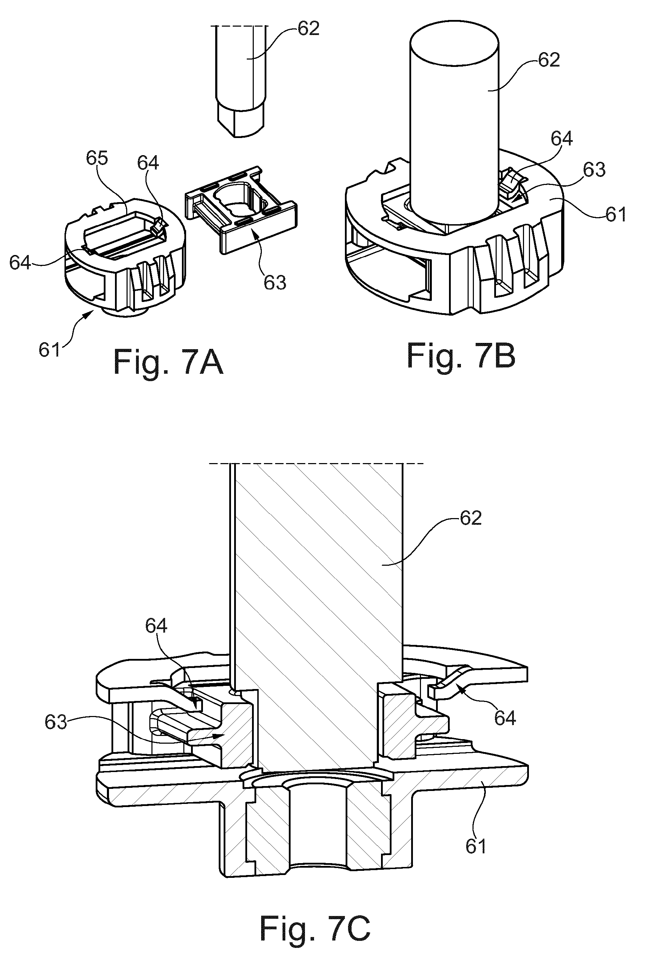

Referring now to figures 7A, 7B and 7C, the seventh embodiment of the invention relates to a coupling assembly similar to the one of the first and fourth embodiments, in particular with the following differences.

The clip fastening means 64 are placed on the first coupling member 61, and more precisely on a median line of the first coupling member 61 according to a plane parallel to the axis X and Y. The clip fastening means 64 are placed on a face opposite to the face supporting the sliding member 63. The first coupling member 61 preferably comprises two clip fastening means 64, as illustrated in figure 7A.

In particular, as illustrated in figure 7C, the clip fastening means 64 allow retaining radially the slider 63 on the first coupling member 61.

More precisely, the slider 63 comprises projections extending radially along the first direction X. The projections of the slider 63 and the clip fastening means 64 are configured to retain radially the slider 63 on the first coupling member 61.

According to a preferred variant, the first coupling member 61 comprises retaining means 65 retaining axially the slider 63 on the first coupling member 61. In particular, the retaining means 65 comprises one coupling projection retaining axially the slider 63 on the first coupling member 61.

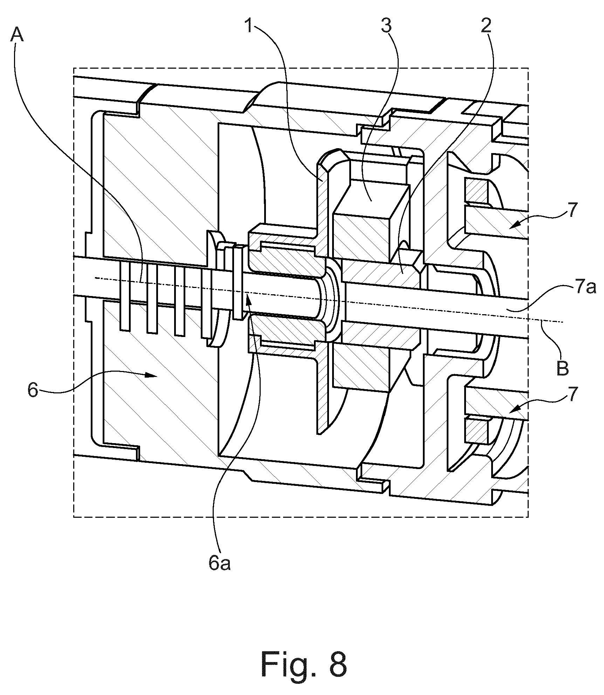

According to a preferred variant of the embodiments, the first coupling members 1,21, 31, 41, 51, 61 are an input discs, and the second coupling members 2, 22, 62 are output members, preferably output shafts. According to the third embodiment, the first coupling member 21 is an output shaft. The invention further relates to a corresponding transmission assembly, as shown in figure 8. The transmission assembly comprises a motor 6 comprising a motor shaft 6a, and a driven member 7 comprising a driven shaft 7a.

According to the invention, the driven shaft 7a is coupled to the motor shaft 6a by a coupling assembly according to the invention, such that the driven member 7 is driven in rotation by the motor 6.

Advantageously, the transmission assembly of the invention involves less manufacturing costs as the assembling of the coupling assembly is more efficient.

The invention also concerns a motor vehicle comprising a transmission assembly according to the invention.

The invention further relates to a method of assembling a coupling assembly according to the invention, comprising the steps of mounting the sliding member 3 on the first coupling member 1; and then mounting the second coupling member 2 on the sliding member 3. The method is detailed hereafter for the first embodiment.

When mounting the sliding member 3 on the first coupling member 1, an operator make the retaining means 4, 5 retain axially and/or radially the slider 3 on the first coupling member 1, and places the sliding member such that the first cooperating means 10a cooperates with the first coupling means.

In particular, the sliding member 3 is clipped on the first coupling member 1, before mounting the second coupling member 2.

Preferably, the sliding member 3 is made to slide on the first coupling member according to direction X, and the clip fastening means 4 thereby clip the sliding member 3 on the first coupling member 1. The clip fastening means 4 retain radially the sliding member 3 on the first coupling member 1.

Once the sliding member 3 is clipped on the first coupling member 1, the retaining means 5, in particular the retaining edge retain axially the sliding member 3 on the first coupling member 1.

When mounting the second coupling member 2 on the sliding member 3, the operator makes the second cooperating means 20a cooperates with the second coupling means 20.

Advantageously, the retaining means of the assembly of the invention avoids that the sliding member slips out of the first coupling member, which improves the efficiency of the assembling method.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Coupling assembly for transmitting a rotational movement, the coupling assembly comprising
- a first coupling member (1; 11; 21; 31; 41; 51; 61) rotationally mounted about a first axis (A), and having a first coupling means (10; 110; 210),
- a second coupling member (2; 12; 22) rotationally mounted about a second axis (B), and having a second coupling means (20; 120; 220),
- a sliding member (3; 13; 23; 33; 43; 53; 63) comprising
- a first cooperating means (10a; 110a; 210a) cooperating with the first coupling means (10; 110; 210) such that the sliding member (3; 13; 23) is translationally moveable relatively to the first coupling member (1; 11; 21) about a first direction (X),
- a second cooperating means (20a; 120a; 220a) cooperating with the second coupling means (20; 120; 220) such that the sliding member (3; 13; 23) is translationally moveable relatively to the second coupling member (2; 12; 22) about a second direction (Y) substantially perpendicular to the first direction (X),
wherein the first coupling member (1; 11; 21; 31; 41; 51; 61) and/or the sliding member (3; 13; 23; 33; 43; 53; 63) comprises retaining means (4, 5; 14, 15; 24, 25; 34, 35; 44, 45; 54, 55; 64, 65) retaining axially and/or radially the slider (3; 13; 23; 33; 43; 53; 63) on the first coupling member (1; 11; 21; 31; 41; 51; 61), such that the first cooperating means (10a; 110a; 210a) cooperates with the first coupling means (10; 110; 210).

2. Coupling assembly according to the preceding claim, wherein the retaining means comprises at least one clip fastening means (4; 14; 24) retaining radially the slider (3; 13; 23) on the first coupling member (1; 11; 21).

3. Coupling assembly according to the preceding claim, wherein the first cooperating means (10a; 110a; 210a) comprises opposite radial ends along the first direction (X), and wherein at least one of said clip fastening means (4; 14; 24) is placed on at least one of said opposite radial ends.

4. Coupling assembly according to claim 2, wherein the sliding member (33; 43; 53) comprises said at least one clip fastening means (34; 44; 54).

5. Coupling assembly according to any of the preceding claims, wherein the retaining means comprises at least one coupling projection (5; 15; 25; 35; 45; 55; 65) retaining axially the slider (3; 13; 23; 33; 43; 53; 63) on the first coupling member (1; 11; 21; 31; 41; 51; 61).

6. Coupling assembly according to the preceding claim, wherein said at least one coupling projection (5) comprises opposite ends along the first direction (X), and wherein at least one of said clip fastening means (4) is placed on at least one of said opposite ends.

7. Coupling assembly according to any of the preceding claims, wherein the retaining means (5; 25) comprises a retaining edge extending along the first direction (X).

8. Coupling assembly according to any of the preceding claims, wherein the retaining means (15; 25) comprises a retaining groove extending along the first direction (X).

9. Coupling assembly according to any of the preceding claims, wherein the first coupling means (10) comprises a coupling groove extending along the first direction (X), the coupling groove receiving the slider (3) such that the slider (3) is translationally moveable on or in the coupling groove, and wherein the retaining means (5) retain axially the slider (3) on or in the coupling groove.

10. Coupling assembly according to any of the claims 1 to 8, wherein the first coupling means (110) comprises a first coupling protuberance extending along the first direction (X), the first coupling protuberance cooperating with the slider (13) such that the slider (13) is translationally moveable on the first coupling protuberance, and wherein the retaining means (15) retain axially the slider (3) on the first coupling protuberance.

11. Coupling assembly according to any of the preceding claims, wherein the second coupling means (20; 120; 220) comprises a second coupling protuberance, and the second cooperating means (20a; 120a; 220a) comprises a cooperating groove extending along the second direction (Y), the cooperating groove receiving the second coupling protuberance such that the slider (3; 13; 23) is translationally moveable relatively to the second coupling member (2; 12; 22).

12. Coupling assembly according to any of the preceding claims, wherein the first coupling member (1; 11) is an input disc, and the second coupling member (2; 12) is an output member, preferably an output shaft.

13. Transmission assembly comprising a motor (6) comprising a motor shaft (6a), and a driven member (7) comprising a driven shaft (7a),
wherein the driven shaft (7a) is coupled to the motor shaft (6a) by a coupling assembly according to any of the preceding claims, such that the driven member (7) is driven in rotation by the motor (6).

14. Motor vehicle comprising a transmission assembly according to the preceding claim.

15. Method of assembling a coupling assembly according to any of claims 1 to 8, comprising the following steps:
- mounting the sliding member (3; 13; 23) on the first coupling member (1; 11; 21) such that the retaining means (4, 5; 14, 15; 24, 25) retain axially and/or radially the slider (3; 13; 23) on the first coupling member (1; 11; 21), and such that the first cooperating means (10a; 110a; 210a) cooperates with the first coupling means (10; 110; 210), and then
- mounting the second coupling member (2; 12; 22) on the sliding member (3; 13; 23), such that the second cooperating means (20a; 120a; 220a) cooperates with the second coupling means (20; 120; 220).
